# EUROPEAN PATENT APPLICATION

(11) **EP 4 383 861 A1**
(43) Date of publication of application: **12.06.2024**
(21) Application number: 22851843.7
(22) Date of filing: 13.07.2022
(51) Int. Cl.: H04W 64/00

(54) **POSITIONING METHOD, POSITIONING DEVICE, AND NON-TRANSITORY COMPUTER READABLE STORAGE MEDIUM**

(30) Priority: 06.08.2021 CN 202110902414
(71) Applicant: Datang Mobile Communications Equipment Co., Ltd., Beijing 100085 (CN)
(72) Inventor: FANG, Rongyi, Beijing 100085 (CN); REN, Bin, Beijing 100085 (CN); ZHANG, Zhenyu, Beijing 100085 (CN); REN, Xiaotao, Beijing 100085 (CN); DA, Ren, Beijing 100085 (CN)
(74) Representative: dompatent von Kreisler Selting Werner - Partnerschaft von Patent- und Rechtsanwälten mbB
(86) International application number: PCT/CN2022/105520
(87) International publication number: WO 2023/011129

(57) **Abstract**

A positioning method, a positioning device, and a non-transitory computer readable storage medium are provided. The method includes: receiving first information reported by at least one base station, or first information reported by target User Equipment UE and first information reported by a reference UE, wherein first information includes at least one of multipath information or time error information; determining a position of the target UE according to the first information reported by the at least one base station or according to the first information reported by the target UE and the first information reported by the reference UE, and according to a preset positioning database.

## Description

### CROSS-REFERENCE TO RELATED APPLICATION

This application claims a priority to Chinese Patent Application No. 202110902414.3 filed on August 6, 2021, the disclosures of which are incorporated in their entirety by reference herein.

### TECHNICAL FIELD

The present disclosure relates to the technical field of wireless communications, and in particular, to a positioning method, a positioning device, and a non-transitory computer-readable storage medium.

### BACKGROUND

In the related art, Finger-Printing positioning is also referred to as Pattern-Matching positioning, the finger-printing positioning has a good effect on overcoming the influence of NLOS (Non-Line of Sight), and the solution of finger-printing positioning is to use received signal finger-printing to match a pre-constructed position finger-printing library to realize the positioning of a target UE (User Equipment). The solution is mainly composed of two parts: an offline training stage for constructing a position finger-printing library and an online positioning stage for performing finger-printing matching. In the offline stage of constructing the position finger-printing library, arrangement of signal finger-printings captured by each monitoring station and finger-printing acquisition of each position in a monitored area are mainly completed; and in the online positioning stage of finger-printing matching, matching between finger-printing of a target UE and finger-printing in a database and final position estimation are mainly completed. For example, finger-printing positioning is performed to a cellular network; in the offline training stage, CSI (Channel State Information) of a reference UE at a known position is collected as a finger-printing, and a finger-printing library is constructed on the basis of the collected finger-printing; in the online positioning stage, the CSI finger-printing of the target UE at the unknown position is matched with the constructed finger-printing library, a position coordinate of optimal matching is selected as the position of the target UE.

### SUMMARY

The present disclosure provides a positioning method, a positioning device, and a non-transitory computer storage medium.

In a first aspect, a positioning method performed by a location management function (LMF) is provided. The method includes: receiving first information reported by at least one base station, or first information reported by target User Equipment (UE) and first information reported by a reference UE, wherein first information includes at least one of multipath information or time error information; determining a position of the target UE according to the first information reported by the at least one base station or according to the first information reported by the target UE and the first information reported by the reference UE, and according to a preset positioning database.

In an embodiment, the first information further includes at least one of following: non-line-of-sight (NLOS) indication information, or Transmission\Reception beam direction information, or indication information indicating whether the position of the target UE is indoor or outdoor,
determining the position of the target UE according to the first information reported by the at least one base station or according to the first information reported by the target UE and the first information reported by the reference UE, and according to the preset positioning database includes: determining a first feature vector according to the first information reported by the at least one first base station, or according to the first information reported by the target UE and the first information reported by the reference UE, and according to known position coordinates of the at least one base station and known position coordinates of the reference UE; matching the first feature vector with each second feature vector in the preset positioning database, and determining a second feature vector having a maximum matching degree with the first feature vector; determining, as the position of the target UE, position coordinates corresponding to the second feature vector having the maximum matching degree with the first feature vector.

In an embodiment, before determining the position of the target UE, the method further includes: receiving time delay values reported by a plurality of base stations, performing single-difference processing between time delay values reported by non-reference base stations in the plurality of base stations and time delay values reported by reference base stations in the plurality of base stations, respectively, and determining single-difference time delay values corresponding to the non-reference base stations; or receiving a single-difference delay value, reported by the target UE or the reference UE, corresponding to each non-reference base station in the plurality of base stations.

In an embodiment, the first information further includes at least one of following: non-line-of-sight NLOS indication information, or Transmission\Reception beam direction information, or indication information indicating whether the position of the target UE is indoor or outdoor,
determining the position of the target UE according to the first information reported by the at least one base station or according to the first information reported by the target UE and the first information reported by the reference UE, and according to the preset positioning database includes: determining a first feature vector according to the first information reported by the at least one base station or according to the first information reported by the target UE and the first information reported by the reference UE, and according to known position coordinates of the plurality of base stations and the single-difference time delay values respectively corresponding to the non-reference base stations; matching the first feature vector with each second feature vector in the preset positioning database, and determining a second feature vector having a maximum matching degree with the first feature vector; and determining, as the position of the target UE, position coordinates corresponding to the second feature vector having the maximum matching degree with the first feature vector.

In an embodiment, before the determining the position of the target UE, the method further includes:
receiving single-difference time delay values reported by the target UE and single-difference time delay values reported by the reference UE, wherein each of the single-difference time delay values is a single-difference time delay value corresponding to a non-reference base station in the plurality of base stations; performing double-difference processing between the single-difference time delay values reported by the target UE and the single-difference time delay values reported by the reference UE, to obtain double-difference values; and converting the double-difference values into single-difference values according to known position coordinates reported by the reference UE and known position coordinates of a base station.

In an embodiment, before determining the position of the target UE, the method further includes: receiving time delay values reported by a plurality of base stations and respectively corresponding to the target UE and a reference UE; performing single-difference processing between a delay value corresponding to the target UE reported by each non-reference base station in the plurality of base stations and a delay value corresponding to the target UE reported by each reference base station in the plurality of base stations, and determining a first single-difference time delay value corresponding to each non-reference base station; performing single-difference processing between the time delay value corresponding to the reference UE reported by each non-reference base station in the plurality of base stations and the time delay value corresponding to the reference UE reported by each reference base station in the plurality of base stations, and determining a second single-difference time delay value corresponding to each non-reference base station; performing double-difference processing between the first single-difference time delay value and the second single-difference time delay value, obtaining a double-difference value; and converting the double-difference value into a single-difference value according to known position coordinates reported by the reference UE and known position coordinates of a base station.

In an embodiment, the first information further includes at least one of following: non-line-of-sight NLOS indication information, or Transmission\Reception beam direction information, or indication information indicating whether the position of the target UE is indoor or outdoor,
determining the position of the target UE according to the first information reported by the at least one base station or according to the first information reported by the target UE and the first information reported by the reference UE, and according to the preset positioning database includes: determining a first feature vector according to the first information reported by the at least one base station or according to the first information reported by the target UE and the first information reported by the reference UE, and according to known position coordinates of a base station, known position coordinates of the reference UE, and the single-difference value; matching the first feature vector with each second feature vector in the preset positioning database, and determining a second feature vector having a maximum matching degree with the first feature vector; and determining, as the position of the target UE, position coordinates corresponding to the second feature vector having the maximum matching degree with the first feature vector.

In an embodiment, the multipath information includes at least one of following: a delay of a specific path of a plurality of paths corresponding to a receiving antenna or delay difference among a plurality of paths corresponding to a receiving antenna; or a power of a specific path; or a phase of a specific path; or phase difference among different receiving antennas; time delay difference between different receiving antennas; or power difference between different receiving antennas; or all or part of data in an array corresponding to a Channel Impulse Response (CIR) of a receiving antenna; or all or part of data in an array corresponding to a Channel Frequency Response (CFR) of a receiving antenna; or all or part of data in an array corresponding to a Power Delay Profile (PDP) of a receiving antenna; or pseudo-spectrum information of a receiving antenna, wherein the receiving antenna is a receiving antenna of a base station, a receiving antenna of the target UE or a receiving antenna of the reference UE, the specific path includes at least one of: top N paths with minimum delays, or a first path with a minimum delay, or M paths with strongest powers, and both N and M are positive integers.

In one embodiment, the time error information includes at least one of following: a clock synchronization error or a clock synchronization error group; or a change in a clock synchronization error or a change in a clock synchronization error group; or a change rate of a clock synchronization error; or a Transmission\Reception time error or a Transmission\Reception time error group; or a change in a Transmission\Reception time error or a change in a Transmission\Reception time error group; or a change rate of a Transmission\Reception time error.

In a second aspect, a positioning method performed by a target User Equipment (UE) or a reference UE is provided. The method includes: receiving a positioning reference signal (PRS) sent by a base station; determining first information according to a pilot of the PRS, wherein the first information includes at least one of multipath information or time error information; reporting the first information to a location management function (LMF), wherein the first information is used by the LMF to determine a position of the target UE.

In a third aspect, a positioning method performed by a base station is provided. including: receiving a sounding reference signal (SRS) sent by a target User Equipment (UE) or a reference UE; determining first information according to a pilot of the SRS, wherein the first information includes at least one of multipath information or time error information; and reporting the first information to a location management function (LMF), wherein the first information is used by the LMF to determine a position of the target UE.

In a fourth aspect, a positioning device applied to a location management function (LMF) is provided. The device includes a memory, a transceiver, and a processor, wherein the memory is configured to store a computer program, the transceiver is configured to transmit and receive data under control of the processor, the processor is configured to read the computer program in the memory and execute following operations: receiving first information reported by at least one base station, or first information reported by a target User Equipment (UE) and first information reported by a reference UE, wherein first information includes at least one of multipath information or time error information; determining a position of the target UE according to the first information reported by the at least one base station or according to the first information reported by the target UE and the first information reported by the reference UE, and according to a preset positioning database.

In an embodiment, the first information further includes at least one of following: non-line-of-sight (NLOS) indication information, or Transmission\Reception beam direction information, or indication information indicating whether the position of the target UE is indoor or outdoor,
determining the position of the target UE according to the first information reported by the at least one base station or according to the first information reported by the target UE and the first information reported by the reference UE, and according to the preset positioning database includes: determining a first feature vector according to the first information reported by the at least one first base station, or according to the first information reported by the target UE and the first information reported by the reference UE, and according to known position coordinates of the at least one base station and known position coordinates of the reference UE; matching the first feature vector with each second feature vector in the preset positioning database, and determining a second feature vector having a maximum matching degree with the first feature vector; determining, as the position of the target UE, position coordinates corresponding to the second feature vector having the maximum matching degree with the first feature vector.

In an embodiment, before determining the position of the target UE, the processor is further configured to read the computer program to implement following: receiving time delay values reported by a plurality of base stations, performing single-difference processing between time delay values reported by non-reference base stations in the plurality of base stations and time delay values reported by reference base stations in the plurality of base stations, respectively, and determining single-difference time delay values corresponding to the non-reference base stations; or receiving a single-difference delay value, reported by the target UE or the reference UE, corresponding to each non-reference base station in the plurality of base stations.

In an embodiment, the first information further includes at least one of following: non-line-of-sight NLOS indication information, or Transmission\Reception beam direction information, or indication information indicating whether the position of the target UE is indoor or outdoor,
determining the position of the target UE according to the first information reported by the at least one base station or according to the first information reported by the target UE and the first information reported by the reference UE, and according to the preset positioning database includes: determining a first feature vector according to the first information reported by the at least one base station or according to the first information reported by the target UE and the first information reported by the reference UE, and according to known position coordinates of the plurality of base stations and the single-difference time delay values respectively corresponding to the non-reference base stations; matching the first feature vector with each second feature vector in the preset positioning database, and determining a second feature vector having a maximum matching degree with the first feature vector; and determining, as the position of the target UE, position coordinates corresponding to the second feature vector having the maximum matching degree with the first feature vector.

In an embodiment, before the determining the position of the target UE, the processor is further configured to read the computer program and implement following: receiving single-difference time delay values reported by the target UE and single-difference time delay values reported by the reference UE, wherein each of the single-difference time delay values is a single-difference time delay value corresponding to a non-reference base station in the plurality of base stations; performing double-difference processing between the single-difference time delay values reported by the target UE and the single-difference time delay values reported by the reference UE, to obtain double-difference values; and converting the double-difference values into single-difference values according to known position coordinates reported by the reference UE and known position coordinates of a base station.

In an embodiment, before determining the position of the target UE, the processor is further configured to read the computer program and implement following: receiving time delay values reported by a plurality of base stations and respectively corresponding to the target UE and a reference UE; performing single-difference processing between a delay value corresponding to the target UE reported by each non-reference base station in the plurality of base stations and a delay value corresponding to the target UE reported by each reference base station in the plurality of base stations, and determining a first single-difference time delay value corresponding to each non-reference base station; performing single-difference processing between the time delay value corresponding to the reference UE reported by each non-reference base station in the plurality of base stations and the time delay value corresponding to the reference UE reported by each reference base station in the plurality of base stations, and determining a second single-difference time delay value corresponding to each non-reference base station; performing double-difference processing between the first single-difference time delay value and the second single-difference time delay value, obtaining a double-difference value; and converting the double-difference value into a single-difference value according to known position coordinates reported by the reference UE and known position coordinates of a base station.

In an embodiment, the first information further includes at least one of following: non-line-of-sight NLOS indication information, or Transmission\Reception beam direction information, or indication information indicating whether the position of the target UE is indoor or outdoor,
determining the position of the target UE according to the first information reported by the at least one base station or according to the first information reported by the target UE and the first information reported by the reference UE, and according to the preset positioning database includes: determining a first feature vector according to the first information reported by the at least one base station or according to the first information reported by the target UE and the first information reported by the reference UE, and according to known position coordinates of a base station, known position coordinates of the reference UE, and the single-difference value; matching the first feature vector with each second feature vector in the preset positioning database, and determining a second feature vector having a maximum matching degree with the first feature vector; and determining, as the position of the target UE, position coordinates corresponding to the second feature vector having the maximum matching degree with the first feature vector.

In an embodiment, the multipath information includes at least one of following: a delay of a specific path of a plurality of paths corresponding to a receiving antenna or delay difference among a plurality of paths corresponding to a receiving antenna; or a power of a specific path; or a phase of a specific path; or phase difference among different receiving antennas; or time delay difference between different receiving antennas; or power difference between different receiving antennas; or all or part of data in an array corresponding to a Channel Impulse Response (CIR) of a receiving antenna; or all or part of data in an array corresponding to a Channel Frequency Response (CFR) of a receiving antenna; or all or part of data in an array corresponding to a Power Delay Profile (PDP) of a receiving antenna; or pseudo-spectrum information of a receiving antenna, wherein the receiving antenna is a receiving antenna of a base station, a receiving antenna of the target UE or a receiving antenna of the reference UE, the specific path includes at least one of: top N paths with minimum delays, or a first path with a minimum delay, or M paths with strongest powers, and both N and M are positive integers.

In one embodiment, the time error information includes at least one of following: a clock synchronization error or a clock synchronization error group; or a change in a clock synchronization error or a change in a clock synchronization error group; or a change rate of a clock synchronization error; or a Transmission\Reception time error or a Transmission\Reception time error group; or a change in a Transmission\Reception time error or a change in a Transmission\Reception time error group; or a change rate of a Transmission\Reception time error.

In a fifth aspect, a positioning device applied to a target User Equipment (UE) or a reference UE is provided. The device includes: a memory, a transceiver, and a processor, wherein the memory is configured to store a computer program, the transceiver is configured to transmit and receive data under control of the processor, the processor is configured to read the computer program in the memory and execute following operations:
receiving a positioning reference signal (PRS) sent by a base station; determining first information according to a pilot of the PRS, wherein the first information includes at least one of multipath information or time error information; reporting the first information to a location management function (LMF), wherein the first information is used by the LMF to determine a position of the target UE.

In a sixth aspect, a positioning device applied to a base station is provided. The device includes: a memory, a transceiver, and a processor, wherein the memory is configured to store a computer program, the transceiver is configured to transmit and receive data under control of the processor, the processor is configured to read the computer program in the memory and execute following operations:
receiving a sounding reference signal (SRS) sent by a target User Equipment (UE) or a reference UE; determining first information according to a pilot of the SRS, wherein the first information includes at least one of multipath information or time error information; and reporting the first information to a location management function (LMF), wherein the first information is used by the LMF to determine a position of the target UE.

In a seventh aspect, a positioning device applied to a location management function (LMF) is provided. The device includes:
a first processing unit configured to receive first information reported by at least one base station, or first information reported by a target User Equipment (UE) and first information reported by a reference UE, wherein first information includes at least one of multipath information or time error information; a second processing unit configured to determine a position of the target UE according to the first information reported by the at least one base station or according to the first information reported by the target UE and the first information reported by the reference UE, and according to a preset positioning database.

In an eighth aspect, a positioning device applied to a target User Equipment (UE) or a reference UE is provided. The device includes:
a third processing unit configured to receive a positioning reference signal (PRS) sent by a base station; a fourth processing unit configured to determine first information according to a pilot of the PRS, wherein the first information includes at least one of multipath information or time error information; a fifth processing unit configured to report the first information to a location management function (LMF), wherein the first information is used by the LMF to determine a position of the target UE.

In a ninth aspect, a positioning device applied to a base station is provided. The device includes:
a sixth processing unit configured to receive a sounding reference signal (SRS) sent by a target User Equipment (UE) or a reference UE; a seventh processing unit configured to determine first information according to a pilot of the SRS, wherein the first information includes at least one of multipath information or time error information; an eighth processing unit configured to report the first information to a location management function (LMF), wherein the first information is used by the LMF to determine a position of the target UE.

In a tenth aspect, a non-transitory computer-readable storage medium, wherein the non-transitory computer-readable storage medium stores a computer program, and the computer program is configured to cause a computer to execute the method according to the first aspect, or the second aspect, or the third aspect.

Additional aspects and advantages of the present disclosure will be given in part in the following description, which will become apparent from the following description, or be learned through the practice of the present disclosure.

### BRIEF DESCRIPTION OF THE DRAWINGS

In order to more clearly illustrate the technical solutions in the embodiments of the present application, accompanying drawings that need to be used in the description of the embodiments of the present application are briefly described below.
FIG. 1 is a schematic diagram of a system architecture according to some embodiments of the present disclosure;
FIG. 2 is a schematic flowchart of a positioning method according to some embodiments of the present disclosure;
FIG. 3 is a schematic flowchart of another positioning method according to some embodiments of the present disclosure;
FIG. 4 is a schematic flowchart of yet another positioning method according to some embodiments of the present disclosure;
FIG. 5 is a schematic structural diagram of a positioning device according to some embodiments of the present disclosure;
FIG. 6 is a schematic structural diagram of a positioning device according to some embodiments of the present disclosure;
FIG. 7 is a schematic structural diagram of a positioning device according to some embodiments of the present disclosure;
FIG. 8 is a schematic structural diagram of a positioning device according to some embodiments of the present disclosure;
FIG. 9 is a schematic structural diagram of a positioning device according to some embodiments of the present disclosure; and
FIG. 10 is a schematic structural diagram of a positioning device according to some embodiments of the present disclosure.

### DETAILED DESCRIPTION

Embodiments of the present disclosure are described in detail below, examples of the embodiments are shown in the accompanying drawings, wherein same or similar reference numerals are used to refer to same or similar elements or elements having same or similar functions throughout the Description. The embodiments described below with reference to the drawings are exemplary, and are only used to explain the present disclosure, but cannot be construed as limiting the present disclosure.

Those skilled in the art will appreciate that singular forms "a," "an," "this," and "the" as used herein may also include the plural forms, unless specifically stated. It should be further understood that phraseology "including" or 'including' used in the specification of the present disclosure refers to presence of the features, integers, steps, operations, elements and/or components, but does not preclude the presence or addition of one or more other features, integers, steps, operations, elements, components, and/or groups thereof. It should be understood that when one element is referred to as being "connected" or "coupled" to another element, the one element may be directly connected or coupled to other elements, or intervening elements may also be present. In addition, "connected" or "coupled" used herein may include a wireless connection or a wireless coupling. As used herein, the term "and/or" includes all or any unit and all combinations of one or more of the associated listed items.

In this embodiment of the present disclosure, the term "and/or" describes association relationship of associated objects, and indicates that there may be three types of relationship, for example, A and/or B may indicate that A exists alone, A and B exist at the same time, and B exists alone. The character "/" generally indicates that associated objects have the "or" relationship. In this embodiment of the present disclosure, the term "a plurality of" means two or more, and other quantifiers are similar to this term.

In order to better understand and explain the solutions of the embodiments of the present disclosure, some of the technical terms involved in the embodiments of the present disclosure are briefly described below.

An Artificial Intelligence (AI) technology is also applied to positioning, and a common solution is to establish a neural network model, that is, inputting, to a neural network model, channel features for training, and continuously optimizing parameters of the neural network model by means of a large amount of training data to obtain a trained neural network model. During final positioning, an actual channel feature is input into the trained neural network model to obtain final position estimation.

An inner product refers generally to a dot product, the dot product is also called a scalar product, and means a binary operation of receiving two vectors on a real number R and returning a real value scalar, and the dot product is a standard inner product in a Euclidean space.

A time error is mainly composed of the following two parts:
(1) CE (Clock Error), CE is introduced due to different time references between a base station and another base station and between a base station and UE;
(2) Tx\Rx TE (Transmitting\Receiving Time Error), the Tx\Rx TE is introduced due to nonlinearity of Tx\Rx filters.

The technical solutions in the embodiments of the present disclosure will be clearly and completely described below with reference to the accompanying drawings in the embodiments of the present disclosure, and obviously, the described embodiments are merely some embodiments of the present disclosure, and are not all embodiments. All other embodiments obtained by a person of ordinary skill in the art based on the embodiments of the present disclosure without creative efforts shall fall within the protection scope of the present disclosure.

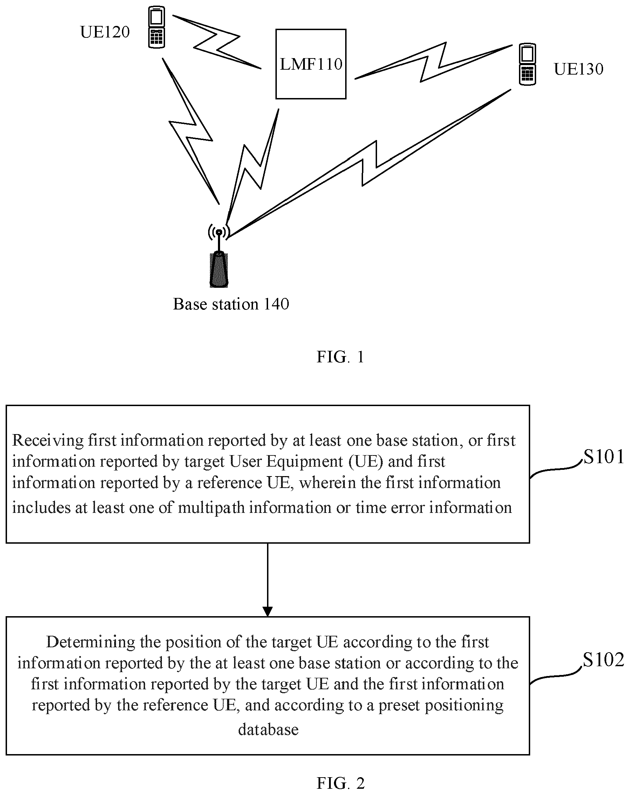

A schematic diagram of a network architecture provided in this embodiment of the present disclosure is shown in FIG. 1, and the network architecture includes a Location Management Function (LMF), a UE, and a base station. In this embodiment of the present disclosure, the LMF refers to hardware, software, or a combination of hardware and software capable of implementing location management functions. For example, the LMF may be a network element. For example, the LMF may be a server and a computing device. For example, the LMF may be formed of software. For example, the LMF 110 in FIG. 1; the UE is, for example, UE 120 (a target UE) and UE 130 (a reference UE) in FIG. 1; and the base station is, for example, the base station 140 in FIG. 1 The base station is deployed in an access network, for example, the base station 140 is deployed in an access network NG-RAN (New Generation-Radio Access Network) in a 5G system. The UE and the base station communicate with each other by means of some air interface technology, for example, may communicate with each other by means of cellular technology.

The UE involved in this embodiment of the present disclosure may be a device that provides a user with voice and/or data connectivity, a handheld device having a wireless connection function, or other processing devices connected to a wireless modem. The UE may include a mobile phone, a vehicle user terminal, a tablet computer, a laptop computer, a personal digital assistant, a mobile Internet access device, a wearable device, etc.

The base station involved in this embodiment of the present disclosure may include a plurality of cells that provide services for the UE. According to different specific application occasions, the base station may also be referred to as an access point, or may be a device, in an access network, that communicates with the UE through one or more sectors on an air interface, or other names. The base station may be configured to transform the received air frame to the Internet Protocol (IP) packet, vice versa. The base station may act as a router between the UE and the remainder of the access network. The remainder of the access network may include an Internet Protocol (IP) communication network. The base station may also coordinate attribute management of the air interface. For example, the base station involved in this embodiment of the present disclosure may be a network device (Base Transceiver Station, BTS) in a Global System for Mobile Communications (GSM) or Code Division Multiple Access (CDMA) system, or may be a network device in (Node B) in a Wide-Band Code Division Multiple Access (WCDMA) system. The base station in the embodiments of the present disclosure may also be an evolutional network device (evolutional Node B, eNB or e-NodeB) in a Long Term Evolution (LTE) system, a 5G base station (gNB) in a next generation system, or a home evolved Node B (HeNB), a relay node, a Femto, a pico base station (pico), etc. The embodiments of the present disclosure are not limited thereto.

In order to make the features, technical solutions and advantages of the present disclosure clearer, the embodiments of the present disclosure will be further described in detail below with reference to the accompanying drawings.

Some embodiments of the present disclosure provide a positioning method, which is executed by an LMF, the schematic flowchart of the method is shown in FIG. 2, and the method may include steps S101 and S102.

Step S101: receiving first information reported by at least one base station, or first information reported by target User Equipment (UE) and first information reported by a reference UE.

The first information includes at least one of multipath information or time error information.

In some embodiments, the LMF receives first information reported by a base station, where the first information includes multipath information and time error information. The first information may further include non-line-of-sight (NLOS) indication information, Tx\Rx beam direction information, and indication information indicating whether a position where the target UE is located is indoor or outdoor.

In some embodiments, the LMF receives the first information reported by the target UE and the first information reported by the reference UE. The first information reported by the target UE includes multipath information and time error information. The first information reported by the target UE may further include non-line-of-sight (NLOS) indication information, Tx\Rx beam direction information, and indication information indicating whether the position of the target UE is indoor or outdoor. The first information reported by the reference UE includes multipath information and time error information. The first information reported by the reference UE may further include non-line-of-sight NLOS indication information, Tx\Rx beam direction information, and indication information indicating whether the position of the target UE is indoor or outdoor.

In some embodiments, the multipath information includes at least one of the following: a delay of a specific path of a plurality of paths corresponding to a receiving antenna or delay difference among a plurality of paths corresponding to a receiving antenna; a power of a specific path; a phase of a specific path; phase difference among different receiving antennas; time delay difference between different receiving antennas; power difference between different receiving antennas; all or part of data in an array corresponding to a CIR (Channel Impulse Response) of a receiving antenna; all or part of data in an array corresponding to a CFR (Channel Frequency Response) of a receiving antenna; all or part of data in an array corresponding to a PDP (Power Delay Profile) of a receiving antenna; and pseudo-spectrum information of a receiving antenna.

The receiving antenna is a receiving antenna of the base station, a receiving antenna of the target UE, or a receiving antenna of the reference UE. The specific path includes at least one of: top N paths with minimum delays, a first path with a minimum delay, or M paths with strongest power, and N and M are both positive integers.

It should be noted that, when the first information is reported by the base station, the receiving antenna involved in the multipath information included in the first information is the receiving antenna of the base station. When the first information is reported by the target UE, the receiving antenna involved in the multipath information included in the first information is the receiving antenna of the target UE. When the first information is reported by the reference UE, the receiving antenna involved in the multipath information included in the first information is the receiving antenna of the reference UE.

In some embodiments, the first path may be a line of sight path.

In some embodiments, the time error information includes at least one of following: a clock synchronization error or a clock synchronization error group; a change in a clock synchronization error or a change in a clock synchronization error group; a change rate of a clock synchronization error; a Tx\Rx time error or a Tx\Rx time error group; a change in a Tx\Rx time error or a change in a Tx\Rx time error group; and a change rate of a Tx\Rx time error.

In some embodiments, the NLOS indication information may be a hard indication or a soft indication. The soft indication includes, but is not limited to, a frequency-domain variance, a time-domain Rice factor, polarization measurement information, a coherent bandwidth, etc.

Step S 102: determining the position of the target UE according to the first information reported by the at least one base station or according to the first information reported by the target UE and the first information reported by the reference UE, and according to a preset positioning database.

In some embodiments, the preset positioning database may be a CNN (Convolutional Neural Network) model trained by artificial intelligence technology.

In some embodiments, the first information further includes at least one of: non-line-of-sight NLOS indication information, Tx\Rx beam direction information, or indication information indicating whether the position of the target UE is indoor or outdoor. Determining the position of the target UE according to the first information reported by the at least one base station or according to the first information reported by the target UE and the first information reported by the reference UE, and according to the preset positioning database includes: determining a first feature vector according to the first information reported by the at least one first base station, or according to the first information reported by the target UE and the first information reported by the reference UE, and according to known position coordinates of the base station and known position coordinates of the reference UE; matching the first feature vector with each second feature vector in the preset positioning database, and determining a second feature vector having a maximum matching degree with the first feature vector; determining position coordinates corresponding to the second feature vector having the maximum matching degree with the first feature vector as the position of the target UE.

In some embodiments, one array is obtained according to the first information reported by the base station or according to the first information reported by the target UE and the first information reported by the reference UE, and according to the known position coordinates of the base station and the known position coordinates of the reference UE. The array includes the first information reported by the base station, or the first information reported by the target UE and the first information reported by the reference UE, and known position coordinates of the base station and known position coordinates of the reference UE. The array corresponds to the first feature vector. Inner product calculation between the first feature vector and each second feature vector in the preset positioning database is performed to obtain the maximum inner product, that is, the maximum matching degree, and the position coordinates corresponding to the second feature vector having the maximum inner product with the first feature vector is determined as the position of the target UE.

In some embodiments, before determining the position of the target UE, the positioning method further includes: receiving time delay values reported by a plurality of base stations, performing single-difference processing between time delay values reported by non-reference base stations in the plurality of base stations and time delay values reported by reference base stations in the plurality of base stations, respectively, and determining the single-difference time delay values corresponding to the non-reference base stations; or receiving a single-difference delay value, reported by the target UE or the reference UE, corresponding to each non-reference base station in the plurality of base stations.

In some embodiments, the delay value may be an RTOA (Relative Time Of Arrival) value, the single-difference delay value may be a TDOA (Time Difference of Arrival) value. Two ways of determining the TDOA by the LMF are as follows:
first way: the LMF receives RTOA values reported by the plurality of base stations, performs single-difference processing between the RTOA values reported by non-reference base stations in the plurality of base stations and the RTOA values reported by reference base stations in the plurality of base stations, respectively, and determines the TDOA corresponding to each non-reference base station;
second way: the LMF receives a TDOA corresponding to each non-reference base station in the plurality of base stations reported by the target UE or the reference UE.

In some embodiments, the first information further includes at least one of following: non-line-of-sight NLOS indication information, Tx\Rx beam direction information, or indication information indicating whether the position of the target UE is indoor or outdoor. In this case, the step S 102 may include: determining the first feature vector according to the first information reported by the at least one base station or according to the first information reported by the target UE and the first information reported by the reference UE, and according to the known position coordinates of the plurality of base stations and the single-difference time delay values respectively corresponding to the non-reference base stations; matching the first feature vector with each second feature vector in the preset positioning database, and determining a second feature vector having the maximum matching degree with the first feature vector; and determining the position coordinates corresponding to the second feature vector having the maximum matching degree with the first feature vector as the position of the target UE.

In some embodiments, an array is obtained according to the first information reported by the plurality of base stations or according to the first information reported by the target UE and the first information reported by the reference UE, and according to the known position coordinates of the plurality of base stations and the single-difference delay values respectively corresponding to the non-reference base stations. The array includes the first information reported by the plurality of base stations or the first information reported by the target UE and the first information reported by the reference UE, and the known position coordinates of the plurality of base stations and the single-difference delay values respectively corresponding to the non-reference base stations. The array corresponds to the first feature vector. Inner product calculation between the first feature vector and each second feature vector in the preset positioning database is performed to obtain the maximum inner product, that is, the maximum matching degree, and the position coordinates corresponding to the second feature vector having the maximum inner product with the first feature vector as the position of the target UE.

In some embodiments, before determining the position of the target UE, the positioning method further includes: receiving single-difference time delay values reported by the target UE and single-difference time delay values reported by the reference UE, wherein each of the single-difference time delay values is a single-difference time delay value corresponding to each non-reference base station in the plurality of base stations; performing double-difference processing between the single-difference time delay values reported by the target UE and the single-difference time delay values reported by the reference UE to obtain double-difference values; and converting the double-difference values into single-difference values according to the known position coordinates reported by the reference UE and the known position coordinates of the base station.

It should be noted that the single-difference delay value may be a TDOA value.

In some embodiments, before determining the position of the target UE, the positioning method further includes: receiving time delay values reported by the plurality of base stations and respectively corresponding to the target UE and the reference UE; performing single-difference processing between the delay value corresponding to the target UE reported by each non-reference base station in the plurality of base stations and the delay value corresponding to the target UE reported by each reference base station in the plurality of base stations respectively, and determining a first single-difference time delay value corresponding to each non-reference base station; performing single-difference processing between the time delay value corresponding to the reference UE reported by each non-reference base station in the plurality of base stations and the time delay value corresponding to the reference UE reported by each reference base station in the plurality of base stations, , and determining a second single-difference time delay value corresponding to each non-reference base station; performing double-difference processing between the first single-difference time delay value and the second single-difference time delay value, obtaining a double-difference value; and converting the double-difference value into a single-difference value according to the known position coordinates reported by the reference UE and the known position coordinates of the base station.

It should be noted that the delay value may be an RTOA value, and the first single-difference delay value and the second single-difference delay value may be TDOA values.

In some embodiments, the first information further includes at least one of non-line-of-sight NLOS indication information, Tx\Rx beam direction information, or indication information indicating whether the position of the target UE is indoor or outdoor. In this case, step S 102 may include: determining the first feature vector according to the first information reported by the at least one base station or according to the first information reported by the target UE and the first information reported by the reference UE, and according to the known position coordinates of the base station, the known position coordinates of the reference UE, and the single-difference value; matching the first feature vector with each second feature vector in the preset positioning database, and determining a second feature vector having the maximum matching degree with the first feature vector; and determining the position coordinates corresponding to the second feature vector having the maximum matching degree with the first feature vector as the position of the target UE.

In some embodiments, an array is obtained according to the first information reported by the base station or according to the first information reported by the target UE and the first information reported by the reference UE, and according to the known position coordinates of the base station, and the known position coordinates of the reference UE and the single-difference value. The array includes the first information reported by the base station, the first information reported by the target UE and the first information reported by the reference UE, and the known position coordinates of the base station, and the known position coordinates of the reference UE and the single-difference value. The array corresponds to the first feature vector. Inner product calculation between the first feature vector and each second feature vector in the preset positioning database is performed to obtain the maximum inner product, that is, the maximum matching degree, and the position coordinates corresponding to the second feature vector having the maximum inner product with the first feature vector are determined as the position of the target UE.

In some embodiments, the first feature vector is determined according to the first information reported by the base station or according to the first information reported by the target UE and the first information reported by the reference UE, and according to the known position coordinates of the base station, and the known position coordinates of the reference UE and the double-difference value.

In this embodiment of the present disclosure, the LMF receives the first information reported by the base station, or the first information reported by the target user equipment (UE) and the first information reported by the reference UE, and determines the position of the target UE according to the first information reported by the base station, or according to the first information reported by the target UE and the first information reported by the reference UE, thereby eliminating the influence of time variability of the time error when the time error has the time variability and in a complex multipath environment, and improving the positioning accuracy of the target UE.

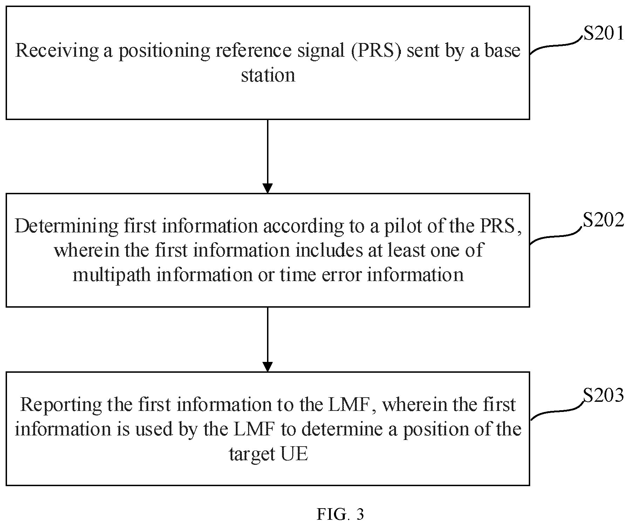

In this embodiment of the present disclosure, a positioning method is provided which is executed by a target UE or a reference UE, a schematic flowchart of the method is shown in FIG. 3, and the method includes steps S201, S202, and S203.

Step S201: receiving a positioning reference signal (PRS) sent by a base station.

In some embodiments, the target UE or the reference UE may receive PRSs sent by a plurality of base stations.

Step S202: determining first information according to a pilot of the PRS. The first information includes at least one of multipath information or time error information.

In some embodiments, the target UE may determine the first information according to pilots of the PRSs of the plurality of base stations; and the reference UE may determine the first information according to the pilots of the PRSs of the plurality of base stations.

In some embodiments, the multipath information includes at least one of the following: a delay of a specific path of a plurality of paths corresponding to a receiving antenna or delay difference among a plurality of paths corresponding to a receiving antenna; a power of a specific path; a phase of a specific path; phase difference among different receiving antennas; time delay difference between different receiving antennas; power difference between different receiving antennas; all or part of data in an array corresponding to a CIR (Channel Impulse Response) of a receiving antenna; all or part of data in an array corresponding to a CFR (Channel Frequency Response) of a receiving antenna; all or part of data in an array corresponding to a PDP (Power Delay Profile) of a receiving antenna; and pseudo-spectrum information of a receiving antenna.

The receiving antenna is a receiving antenna of the target UE or a receiving antenna of the reference UE. The specific path includes at least one of: top N paths with minimum delays, a first path with a minimum delay, or M paths with strongest power, and N and M are both positive integers.

In some embodiments, the time error information includes at least one of following: a clock synchronization error or a clock synchronization error group; a change in a clock synchronization error or a change in a clock synchronization error group; a change rate of a clock synchronization error; a Tx\Rx time error or a Tx\Rx time error group; a change in a Tx\Rx time error or a change in a Tx\Rx time error group; and a change rate of a Tx\Rx time error.

Step S203: reporting the first information to the LMF, wherein the first information is used by the LMF to determine a position of the target UE.

In some embodiments, the target UE and the reference UE may report the first information to the LMF, respectively. The LMF may determine the position of the target UE according to the first information.

In this embodiment of the present disclosure, the target UE and the reference UE report the first information to the LMF, respectively, thereby eliminating the influence of time variability of the time error when the time error has the time variability and in a complex multipath environment, and improving the positioning accuracy of the target UE.

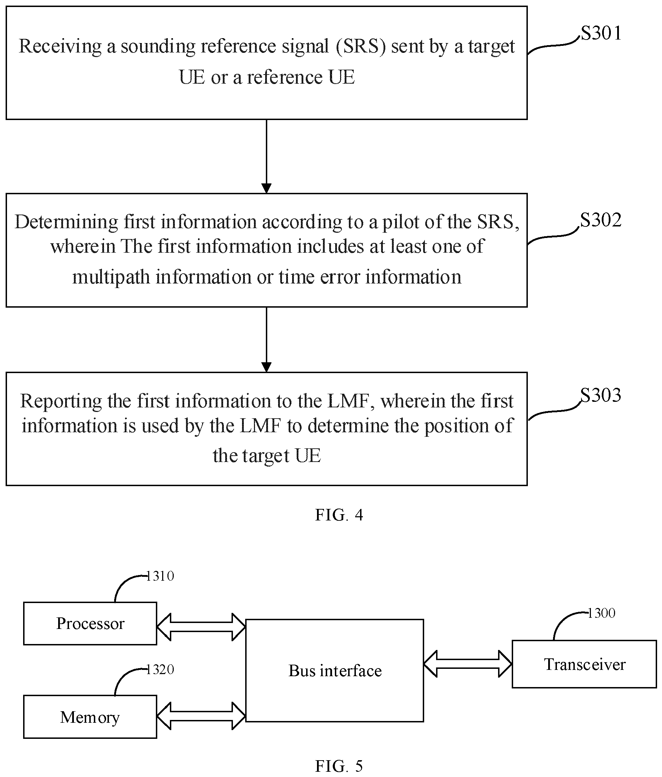

In some embodiments of the present disclosure, a positioning method is provided which is executed by a base station, a schematic flowchart of the method is shown in FIG. 4, and the method includes steps S301, S302, and S303.

Step S301: receiving a sounding reference signal (SRS) sent by a target UE or a reference UE.

Step S302: determining first information according to a pilot of the SRS. The first information includes at least one of multipath information or time error information.

In some embodiments, the multipath information includes at least one of the following: a delay of a specific path of a plurality of paths corresponding to a receiving antenna or delay difference among a plurality of paths corresponding to a receiving antenna; a power of a specific path; a phase of a specific path; phase difference among different receiving antennas; time delay difference between different receiving antennas; power difference between different receiving antennas; all or part of data in an array corresponding to a CIR (Channel Impulse Response) of a receiving antenna; all or part of data in an array corresponding to a CFR (Channel Frequency Response) of a receiving antenna; all or part of data in an array corresponding to a PDP (Power Delay Profile) of a receiving antenna; and pseudo-spectrum information of a receiving antenna.

The receiving antenna is a receiving antenna of the base station. The specific path includes at least one of: top N paths with minimum delays, a first path with a minimum delay, or M paths with strongest power, and N and M are both positive integers.

In some embodiments, the time error information includes at least one of following: a clock synchronization error or a clock synchronization error group; a change in a clock synchronization error or a change in a clock synchronization error group; a change rate of a clock synchronization error; a Tx\Rx time error or a Tx\Rx time error group; a change in a Tx\Rx time error or a change in a Tx\Rx time error group; and a change rate of a Tx\Rx time error.

Step S303: reporting the first information to the LMF, wherein the first information is used by the LMF to determine the position of the target UE.

In some embodiments, the base station may report the first information to the LMF. The LMF may determine the position of the target UE according to the first information.

In this embodiment of the present disclosure, the base station reports the first information to the LMF, thereby eliminating the influence of time variability of the time error when the time error has the time variability and in a complex multipath environment, and improving the positioning accuracy of the target UE.

The positioning methods of the above embodiments of the present disclosure are described in detail through the following embodiments:
An embodiment of the present disclosure is a downlink positioning scenario, and adopts a double-difference positioning mode. The present embodiment mainly includes two stages: an offline training stage of constructing a positioning database and an online positioning stage of determining the position of the target UE.

### (1) Offline Training Phase

In the offline training phase, related data of a position of a UE (the target UE participating in training or the reference UE participating in training) at one grid point is collected. The collection includes steps A1 to A7, a large amount of data collection work needs to be carried out in the offline training stage, and the UE needs to be used for repeating the steps A1 to A7 at multiple grid points.

Step A1: the base station sends the pilot of the PRS and the PRS to the UE, and reports the known position coordinates of the base station to the LMF.

Step A2: the UE receives the pilot of the PRS and the PRS sent by the base station.

Step A3: the UE determines the first information according to the pilot of the PRS. The first information includes multipath information, time error information, NLOS indication information, Tx\Rx beam direction information, and indication information indicating whether the position where the target UE participating in training is located is indoor or outdoor.

In this embodiment, the multipath information includes delays, power values, and phases of top five paths having strongest energy measured by each receiving antenna of the UE.

In this embodiment, the time error information includes a receiving time error group and a sending time error group corresponding to a current measurement value.

Step A4: the UE performs single-difference processing between the RTOA values of different base stations and the RTOA value of the reference base station to obtain a plurality of TDOA values.

Step A5: the UE reports the first information, the position coordinates of the UE, the position coordinates of the plurality of receiving antennas of the UE, and the TDOA values to the LMF.

Step A6: the LMF performs double-difference processing between the TDOA values reported by the target UE participating in training and the TDOA values reported by the reference UE participating in training, to obtain a double-difference value; and according to the known position coordinates of the reference UE participating in training and the known position coordinates of the base station, converts the double-difference value into a single-difference value.

Step A7: the LMF binds a vector group with the position of the target UE participating in training, to generate a feature finger-printing vector, that is, the second feature vector, wherein the vector group includes first information reported by the target UE participating in training and the first information reported by the reference UE participating in training, the known position coordinates of the base station, the known position coordinates and the single-difference value of the reference UE participating in training.

It should be noted that the positioning database is constructed through the plurality of second feature vectors. Different positioning databases may be constructed for known position coordinates of different reference UEs participating in training.

### (2) Online Positioning Stage

The online positioning stage includes steps B1 to B7.

Step B1: the base station sends the pilot of the PRS and the PRS to the UE (the target UE or the reference UE), and reports the known position coordinates of the base station to the LMF.

Step B2: the UE receives the pilot of the PRS and the PRS sent by the base station.

Step B3: the UE determines the first information according to the pilot of the PRS. The first information includes multipath information, time error information, NLOS indication information, Tx\Rx beam direction information, and indication information indicating whether the position of the target UE is indoor or outdoor.

In this embodiment, the multipath information includes delays, power values, and phases of top five paths having strongest energy measured by each receiving antenna of the UE.

In this embodiment, the time error information includes a receiving time error group and a sending time error group corresponding to a current measurement value.

Step B4: the UE performs single-difference processing between the RTOA values of different base stations and the RTOA value of the reference base station to obtain a plurality of TDOA values.

Step B5: the UE reports the first information, the position coordinates of the reference UE, the position coordinates of the plurality of receiving antennas of the reference UE, and the TDOA values to the LMF.

It should be noted that both the known position coordinates of the reference UE and the position coordinates of the plurality of receiving antennas of the reference UE are reported to the LMF by the reference UE.

Step B6: the LMF performs double-difference processing between the TDOA values reported by the target UE and the TDOA values reported by the reference UE, to obtain a double-difference value; and according to the known position coordinates of the reference UE and the known position coordinates of the base station, converts the double-difference value into a single-difference value.

Step B7: The LMF obtains one array according to the first information reported by the target UE and the first information reported by the reference UE and the known position coordinates of the base station, the known position coordinates of the reference UE, and the single-difference value. The array includes the first information reported by the target UE and the first information reported by the reference UE, and the known position coordinates of the base station, and the known position coordinates and the single-difference value of the reference UE. The array corresponds to a first feature vector. The LMF performs inner product calculation between the first feature vector and each second feature vector in the positioning database to obtain the maximum inner product, that is, the maximum matching degree, and determines the position coordinate corresponding to the second feature vector having the largest inner product with the first feature vector as the position of the target UE.

The technical solution provided in the embodiments of the present disclosure has at least the following beneficial effects:
in this embodiment of the present disclosure, the target UE and the reference UE report first information to the LMF, respectively, thereby eliminating the influence of time variability of the time error when the time error has the time variability and in a complex multipath environment, and improving the positioning accuracy of the target UE.

An embodiment of the present disclosure is an uplink positioning scenario, and adopts a single-difference positioning mode. The present embodiment mainly includes two stages: an offline training stage of constructing a positioning database and an online positioning stage of determining the position of the target UE.

### (1) Offline Training stage

In the offline training stage, related data of a position of a UE (the target UE participating in training) at one grid point is collected. The collection includes steps C1 to C6, a large amount of data collection work needs to be carried out in the offline training stage, and the UE needs to be used for repeating the steps C1 to C6 at multiple grid points.

Step C1: the UE sends the pilot of the SRS and the SRS to the base station, and reports the known position coordinates of the UE to the LMF.

Step C2: the base station receives the pilot of the SRS and the SRS sent by the UE.

Step C3: the base station determines the first information and the RTOA value according to the pilot of the SRS. The first information includes multipath information, time error information, NLOS indication information, Tx\Rx beam direction information, and indication information indicating whether the position where the target UE participating in training is located is indoor or outdoor.

In this embodiment, the multipath information includes delays, power values, and phases of top five paths having lowest delays measured between a receiving antenna of the target UE participating in training and a receiving antenna of the reference UE participating in training.

In this embodiment, the time error information includes a variation estimation of the Tx\Rx time error.

Step C4: the base station reports the first information, the RTOA value, the known position coordinates of the base station, and the positions of the plurality of receiving antennas of the base station to the LMF.

Step C5: the LMF performs single-difference processing between the RTOA values of non-reference base stations of the plurality of base stations and the RTOA values of the reference base stations of the plurality of reference base stations, to obtain TDOA values respectively corresponding to the non-reference base stations.

Step C6: the LMF binds a vector group with the position of the UE to generate a feature finger-printing vector, i.e., the second feature vector, wherein the vector group includes the first information reported by the plurality of base station, the known position coordinates of the plurality of base stations, and the TDOA values corresponding to the non-reference base stations.

It should be noted that the positioning database is constructed by means of a plurality of second feature vectors.

### (2) Online Positioning Stage

The online positioning stage includes steps D1 to D7.

Step D1: the target UE sends the pilot of the SRS and the SRS to the base station.

Step D2: the base station receives the pilot of the SRS and the SRS sent by the target UE.

Step D3: the base station determines the first information and the RTOA values according to the pilot of the SRS. The first information includes multipath information, time error information, NLOS indication information, Tx\Rx beam direction information, and indication information indicating whether the position of the target UE is indoor or outdoor.

In this embodiment, the multipath information includes delay differences, power value differences, and phase differences of top five paths having lowest delays measured by receiving antennas of the target UE and receiving antennas of the reference UE.

In this embodiment, the time error information includes a variation estimation of a Tx\Rx time error.

Step D4: the base station reports the first information, the RTOA values, the known position coordinates of the base station, the position coordinates of the plurality of receiving antennas of the base station to the LMF.

Step D5: the LMF performs single-difference processing between the TDOA values reported by the non-reference base stations of the plurality of base stations and the TDOA values reported by the reference base stations of the plurality of base stations, to obtain the TDOA values corresponding to the non-reference base stations.

Step D6: the LMF obtains one array according to the first information reported by the plurality of base stations and the known position coordinates of the plurality of base stations and the TDOA values corresponding to the non-reference base stations. The array includes the first information reported by the plurality of base stations, the known position coordinates of the plurality of base stations, and the TDOA values corresponding to the non-reference base stations. The array corresponds to a first feature vector. The LMF performs inner product calculation between the first feature vector and each second feature vector in the positioning database to obtain the maximum inner product, that is, the maximum matching degree, and determines the position coordinate corresponding to the second feature vector having the largest inner product with the first feature vector as the position of the target UE.

The technical solution provided in the embodiments of the present disclosure has at least the following beneficial effects:
in this embodiment of the present disclosure, first information is reported to the LMF, thereby eliminating the influence of time variability of the time error when the time error has the time variability and in a complex multipath environment, and improving the positioning accuracy of the target UE.

An embodiment of the present disclosure is an uplink positioning scenario, and adopts a non-difference positioning mode. The present embodiment mainly includes two stages: an offline training stage of constructing a positioning database and an online positioning stage of determining the position of the target UE.

### (1) Offline Training stage

In the offline training stage, related data of a position of a UE (the target UE participating in training) at one grid point is collected. The collection includes steps E1 to E5, a large amount of data collection work needs to be carried out in the offline training stage, and the UE needs to be used for repeating the steps E1 to E6 at multiple grid points.

Step E1: the UE sends the pilot of the SRS and the SRS to the base station, and reports the known position coordinates of the UE to the LMF.

Step E2: the base station receives the pilot of the SRS and the SRS sent by the UE.

Step E3: the base station determines the first information according to the pilot of the SRS. The first information includes multipath information, time error information, NLOS indication information, Tx\Rx beam direction information, and indication information indicating whether the position where the target UE participating in training is located is indoor or outdoor.

In this embodiment, the multipath information includes CFR of receiving antennas of the target UE participating in training.

In this embodiment, the time error information includes a variation estimation of the current time error.

It should be noted that the current time error is obtained by calculating the sum of the clock synchronization error and the Tx\Rx time error.

Step E4: the base station reports the first information, the known position coordinates of the base station, and the positions of the plurality of receiving antennas of the base station to the LMF.

Step E5: the LMF binds a vector group with the position of the UE to generate a feature finger-printing vector, i.e., the second feature vector, wherein the vector group includes the first information reported by the base station, the known position coordinates of the base station, the positions of the plurality of receiving antennas of the base station, and the known position coordinates of the UE.

It should be noted that the positioning database is constructed by means of a plurality of second feature vectors.

### (2) Online Positioning Stage

The online positioning stage includes steps F1 to F5.

Step F1: the target UE sends the pilot of the SRS and the SRS to the base station.

Step F2: the base station receives the pilot of the SRS and the SRS sent by the target UE.

Step F3: the base station determines the first information according to the pilot of the SRS. The first information includes multipath information, time error information, NLOS indication information, Tx\Rx beam direction information, and indication information indicating whether the position where the target UE participating in training is located is indoor or outdoor.

In this embodiment, the multipath information includes CFRs of the receiving antennas of the target UE.

In this embodiment, the time error information includes a variation estimation of the current time error.

It should be noted that the current time error is obtained by calculating the sum of the clock synchronization error and the Tx\Rx time error.

Step F4: the base station reports the first information, the known position coordinates of the base station, the position coordinates of the plurality of receiving antennas of the base station to the LMF.

Step F6: the LMF obtains one array according to the first information reported by the base station and the known position coordinates of the base station or the positions of the plurality of receiving antennas of the base stations. The array includes the first information reported by the base station, and the known position coordinates of the base station or the positions of the plurality of receiving antennas of the base station. The array corresponds to a first feature vector. The LMF performs inner product calculation between the first feature vector and each second feature vector in the positioning database to obtain the maximum inner product, that is, the maximum matching degree, and determines the position coordinate corresponding to the second feature vector having the largest inner product with the first feature vector as the position of the target UE.

The technical solution provided in the embodiments of the present disclosure has at least the following beneficial effects: in this embodiment of the present disclosure, first information is reported to the LMF, thereby eliminating the influence of time variability of the time error when the time error has the time variability and in a complex multipath environment, and improving the positioning accuracy of the target UE.

Based on the same inventive concept, some embodiments of the present disclosure further provide a positioning device, which is applied to an LMF. A schematic structural diagram of the apparatus is shown in FIG. 5, and may include a processor 1310, a memory 1320, and a transceiver 1300, where the transceiver 1300 is configured to receive and send data under the control of the processor 1310.

In FIG. 5, a bus architecture may include any number of interconnected buses and bridges. Specifically, various circuits such as one or more processors represented by the processor 1310 and a memory represented by the memory 1320 are linked together. The bus architecture may also link together various other circuits, such as peripheral devices, voltage regulators, and power management circuits, etc. which are well known in the art, and therefore are not further described herein. The bus interface provides an interface. The transceiver 1300 may be a plurality of elements, i.e. include a transmitter and a receiver, and provide units for communicating with various other devices on a transmission medium. The transmission medium includes a wireless channel, a wired channel, and an optical cable. The processor 1310 is responsible for managing the bus architecture and general processing. The memory 1320 may store the data used when the processor 1310 performs operations.

The processor 1310 may be a central processing unit (CPU), an application specific integrated circuit (ASIC), a field-programmable gate array (FPGA), or a complex programmable logic device (CPLD). The processor may also employ a multi-core architecture.

The processor 1310 is configured to read the computer program in the memory and perform the following operations:
receiving first information reported by at least one base station, or first information reported by target User Equipment (UE) and first information reported by a reference UE, wherein first information includes at least one of multipath information or time error information;
determining the position of the target UE according to the first information reported by the at least one base station or according to the first information reported by the target UE and the first information reported by the reference UE, and according to a preset positioning database.

In some embodiments, the first information may further include at least one of following: non-line-of-sight (NLOS) indication information, Tx\Rx beam direction information, or indication information indicating whether a position where the target UE is located is indoor or outdoor. In this case, the processor 1310 may be specifically configured to read the computer program to perform following:
determining a first feature vector according to the first information reported by the at least one first base station, or according to the first information reported by the target UE and the first information reported by the reference UE, and according to known position coordinates of the base station and known position coordinates of the reference UE;
matching the first feature vector with each second feature vector in the preset positioning database, and determining a second feature vector having a maximum matching degree with the first feature vector;
determining position coordinates corresponding to the second feature vector having the maximum matching degree with the first feature vector as the position of the target UE.

In some embodiments, before determining the position of the target UE, the processor 1310 may further perform the following operations through reading the computer program:
receiving time delay values reported by a plurality of base stations, performing single-difference processing between time delay values reported by non-reference base stations in the plurality of base stations and time delay values reported by reference base stations in the plurality of base stations, respectively, and determining the single-difference time delay values corresponding to the non-reference base stations; or
receiving a single-difference delay value, reported by the target UE or the reference UE, corresponding to each non-reference base station in the plurality of base stations.

In some embodiments, the first information further includes at least one of following: non-line-of-sight NLOS indication information, Tx\Rx beam direction information, or indication information indicating whether the position of the target UE is indoor or outdoor. In this case, the processor 1310 may specifically perform the following operations by reading the computer program:
determining the first feature vector according to the first information reported by the at least one base station or according to the first information reported by the target UE and the first information reported by the reference UE, and according to the known position coordinates of the plurality of base stations and the single-difference time delay values respectively corresponding to the non-reference base stations;
matching the first feature vector with each second feature vector in the preset positioning database, and determining a second feature vector having the maximum matching degree with the first feature vector; and
determining the position coordinates corresponding to the second feature vector having the maximum matching degree with the first feature vector as the position of the target UE.

In some embodiments, before determining the position of the target UE, the processor 1310 may further perform the following operations when reading the computer program:
receiving single-difference time delay values reported by the target UE and single-difference time delay values reported by the reference UE, wherein each of the single-difference time delay values is a single-difference time delay value corresponding to each non-reference base station in the plurality of base stations;
performing double-difference processing between the single-difference time delay values reported by the target UE and the single-difference time delay values reported by the reference UE to obtain double-difference values; and
converting the double-difference values into single-difference values according to the known position coordinates reported by the reference UE and the known position coordinates of the base station.

In some embodiments, before determining the position of the target UE, the processor 1310 may further perform the following operations when reading the computer program:
receiving time delay values reported by the plurality of base stations and respectively corresponding to the target UE and the reference UE;
performing single-difference processing between the delay value corresponding to the target UE reported by each non-reference base station in the plurality of base stations and the delay value corresponding to the target UE reported by each reference base station in the plurality of base stations respectively, and determining a first single-difference time delay value corresponding to each non-reference base station;
performing single-difference processing between the time delay value corresponding to the reference UE reported by each non-reference base station in the plurality of base stations and the time delay value corresponding to the reference UE reported by each reference base station in the plurality of base stations, and determining a second single-difference time delay value corresponding to each non-reference base station;
performing double-difference processing between the first single-difference time delay value and the second single-difference time delay value, obtaining a double-difference value; and
converting the double-difference value into a single-difference value according to the known position coordinates reported by the reference UE and the known position coordinates of the base station.

In some embodiments, the first information further includes at least one of non-line-of-sight NLOS indication information, Tx\Rx beam direction information, or indication information indicating whether the position of the target UE is indoor or outdoor. In this case, the processor 1310 may specifically perform following when reading the computer program:
determining the first feature vector according to the first information reported by the at least one base station or according to the first information reported by the target UE and the first information reported by the reference UE, and according to the known position coordinates of the base station, the known position coordinates of the reference UE, and the single-difference value;
matching the first feature vector with each second feature vector in the preset positioning database, and determining a second feature vector having the maximum matching degree with the first feature vector; and
determining the position coordinates corresponding to the second feature vector having the maximum matching degree with the first feature vector as the position of the target UE.

In some embodiments, the multipath information includes at least one of the following: a delay of a specific path of a plurality of paths corresponding to a receiving antenna or delay difference among a plurality of paths corresponding to a receiving antenna; a power of a specific path; a phase of a specific path; phase difference among different receiving antennas; time delay difference between different receiving antennas; power difference between different receiving antennas; all or part of data in an array corresponding to a CIR (Channel Impulse Response) of a receiving antenna; all or part of data in an array corresponding to a CFR (Channel Frequency Response) of a receiving antenna; all or part of data in an array corresponding to a PDP (Power Delay Profile) of a receiving antenna; and pseudo-spectrum information of a receiving antenna.

The receiving antenna is a receiving antenna of the base station, a receiving antenna of the target UE or a receiving antenna of the reference UE. The specific path includes at least one of: top N paths with minimum delays, a first path with a minimum delay, or M paths with strongest power, and N and M are both positive integers.

In some embodiments, the time error information includes at least one of following: a clock synchronization error or a clock synchronization error group; a change in a clock synchronization error or a change in a clock synchronization error group; a change rate of a clock synchronization error; a Tx\Rx time error or a Tx\Rx time error group; a change in a Tx\Rx time error or a change in a Tx\Rx time error group; and a change rate of a Tx\Rx time error.

It should be noted that the above-mentioned device provided in the embodiments of the present disclosure can implement all method steps implemented by the foregoing method embodiments, and can achieve the same technical effect, and parts and beneficial effects, same as those of the method embodiments, in this embodiment are not described in detail herein.

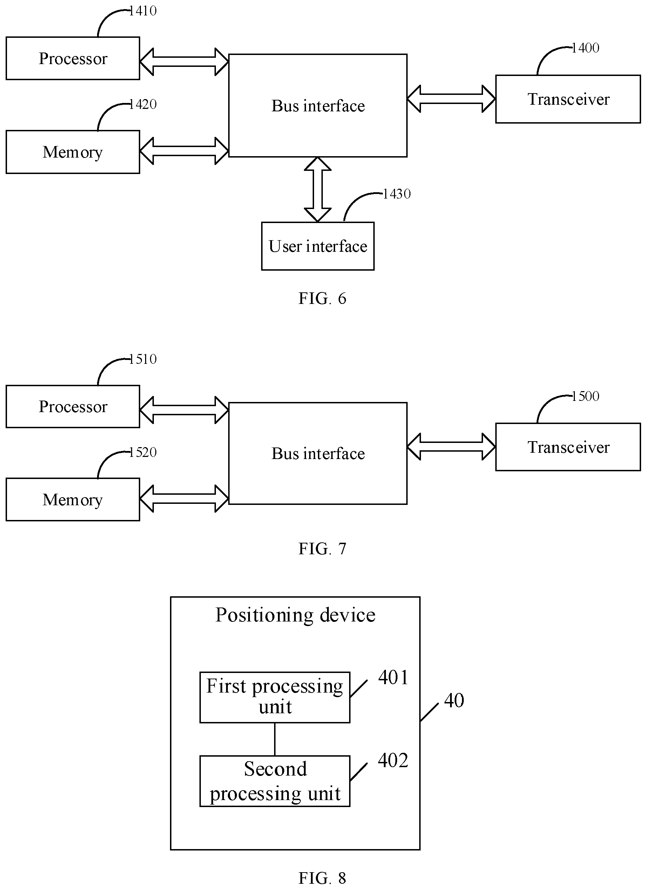

Based on the same inventive concept, some embodiments of the present disclosure further provides a positioning device, which is applied to a target UE or a reference UE. A schematic structural diagram of the device is shown in FIG. 6, and may include a processor 1410, a memory 1420, a user interface 1430, and a transceiver 1400, where the transceiver 1400 is configured to receive and send data under the control of the processor 1410.

In FIG. 6, a bus architecture may include any number of interconnected buses and bridges. Specifically, various circuits such as one or more processors represented by the processor 1410 and a memory represented by the memory 1420 are linked together. The bus architecture may also link together various other circuits, such as peripheral devices, voltage regulators, and power management circuits, etc. which are well known in the art, and therefore are not further described herein. The bus interface provides an interface. The transceiver 1400 may be a plurality of elements, i.e. include a transmitter and a receiver, and provide units for communicating with various other devices on a transmission medium. The transmission medium includes a wireless channel, a wired channel, and an optical cable. For different user equipment, the user interface 1430 may also be an interface that can be externally or internally connected to a required device, and the connected device includes, but is not limited to, a keypad, a display, a speaker, a microphone, a joystick, etc.

The processor 1410 is responsible for managing bus architectures and general processing. The memory 1420 may store data used by the processor 1410 when performing an operation.

Optionally, the processor 1410 may be a CPU (central processing unit), an ASIC (Application Specific Integrated Circuit), an FPGA (Field-Programmable Gate Array) or a CPLD (Complex Programmable Logic Device, Complex Programmable Logic Device). The processor may also employ a multi-core architecture.

The processor is configured to, by invoking the computer program stored in the memory, perform the method according to the second aspect provided by the embodiments of the present disclosure according to the obtained executable instruction. The processor and the memory may also be physically separately arranged.

The processor 1410 is configured to read the computer program in the memory 1420 and perform the following operations:
receiving a positioning reference signal (PRS) sent by a base station;
determining first information according to a pilot of the PRS, wherein the first information includes at least one of multipath information or time error information;
reporting the first information to the LMF, wherein the first information is used by the LMF to determine a position of the target UE.

It should be noted that the above-mentioned device provided in the embodiments of the present disclosure can implement all method steps implemented by the foregoing method embodiments, and can achieve the same technical effect, and the parts and beneficial effects, same as those of the method embodiments, in this embodiment are not described in detail herein.

Based on the same inventive concept, some embodiments of the present disclosure further provides a positioning device, which is applied to a base station. A schematic structural diagram of the device is shown in FIG. 7, and may include a processor 1510, a memory 1520, and a transceiver 1500, where the transceiver 1500 is configured to receive and send data under the control of the processor 1510.

In FIG. 7, a bus architecture may include any number of interconnected buses and bridges. Specifically, various circuits such as one or more processors represented by the processor 1510 and a memory represented by the memory 1520 are linked together. The bus architecture may also link together various other circuits, such as peripheral devices, voltage regulators, and power management circuits, etc. which are well known in the art, and therefore are not further described herein. The bus interface provides an interface. The transceiver 1500 may be a plurality of elements, i.e. include a transmitter and a receiver, and provide units for communicating with various other devices on a transmission medium. The transmission medium includes a wireless channel, a wired channel, and an optical cable. The processor 1510 is responsible for managing the bus architecture and general processing. The memory 1520 may store the data used when the processor 1510 performs operations.

The processor 1510 may be a central processing unit (CPU), an application specific integrated circuit (ASIC), a field-programmable gate array (FPGA), or a complex programmable logic device (CPLD). The processor may also employ a multi-core architecture.

The processor 1510 is configured to read a computer program in the memory and perform the following operations:
receiving a sounding reference signal (SRS) sent by a target UE or a reference UE;
determining first information according to a pilot of the SRS, wherein the first information includes at least one of multipath information or time error information; and
reporting the first information to the LMF, wherein the first information is used by the LMF to determine the position of the target UE.

It should be noted that the above-mentioned device provided in the embodiments of the present disclosure can implement all method steps implemented by the foregoing method embodiments, and can achieve the same technical effect, and parts and beneficial effects, same as those of the method embodiments, in this embodiment are not described in detail herein.

Based on the same inventive concept of the foregoing embodiments, some embodiments of the present disclosure further provide a positioning device, which is applied to an LMF. A schematic structural diagram of the device is shown in FIG. 8. The positioning device 40 may include a first processing unit 401 and a second processing unit 402.

The first processing unit is configured to receive first information reported by at least one base station, or first information reported by target User Equipment (UE) and first information reported by a reference UE, wherein first information includes at least one of multipath information or time error information.

The second processing unit is configured to determine the position of the target UE according to the first information reported by the at least one base station or according to the first information reported by the target UE and the first information reported by the reference UE, and according to a preset positioning database.

In some embodiments, the first information may further include at least one of following: non-line-of-sight (NLOS) indication information, Tx\Rx beam direction information, or indication information indicating whether a position where the target UE is located is indoor or outdoor. The second processing unit 402 is specifically configured to:
determine a first feature vector according to the first information reported by the at least one first base station, or according to the first information reported by the target UE and the first information reported by the reference UE, and according to known position coordinates of the base station and known position coordinates of the reference UE;
match the first feature vector with each second feature vector in the preset positioning database, and determine a second feature vector having a maximum matching degree with the first feature vector;
determine position coordinates corresponding to the second feature vector having the maximum matching degree with the first feature vector as the position of the target UE.

In some embodiments, before determining the position of the target UE, the second processing unit 402 is further configured to:
receive time delay values reported by a plurality of base stations, perform single-difference processing between time delay values reported by non-reference base stations in the plurality of base stations and time delay values reported by reference base stations in the plurality of base stations, respectively, and determine the single-difference time delay values corresponding to the non-reference base stations; or
receive a single-difference delay value, reported by the target UE or the reference UE, corresponding to each non-reference base station in the plurality of base stations.

In some embodiments, the first information further includes at least one of following: non-line-of-sight NLOS indication information, Tx\Rx beam direction information, or indication information indicating whether the position of the target UE is indoor or outdoor. The second processing unit 402 is specifically configured to:
determine the first feature vector according to the first information reported by the at least one base station or according to the first information reported by the target UE and the first information reported by the reference UE, and according to the known position coordinates of the plurality of base stations and the single-difference time delay values respectively corresponding to the non-reference base stations;
match the first feature vector with each second feature vector in the preset positioning database, and determine a second feature vector having the maximum matching degree with the first feature vector; and
determine the position coordinates corresponding to the second feature vector having the maximum matching degree with the first feature vector as the position of the target UE.

In some embodiments, before determining the position of the target UE, the second processing unit 402 is further configured to:
receive single-difference time delay values reported by the target UE and single-difference time delay values reported by the reference UE, wherein each of the single-difference time delay values is a single-difference time delay value corresponding to each non-reference base station in the plurality of base stations;
perform double-difference processing between the single-difference time delay values reported by the target UE and the single-difference time delay values reported by the reference UE to obtain double-difference values; and
convert the double-difference values into single-difference values according to the known position coordinates reported by the reference UE and the known position coordinates of the base station.

In some embodiments, before determining the position of the target UE, the second processing unit 402 is further configured to:
receive time delay values reported by the plurality of base stations and respectively corresponding to the target UE and the reference UE;
perform single-difference processing between the delay value corresponding to the target UE reported by each non-reference base station in the plurality of base stations and the delay value corresponding to the target UE reported by each reference base station in the plurality of base stations respectively, and determine a first single-difference time delay value corresponding to each non-reference base station;
perform single-difference processing between the time delay value corresponding to the reference UE reported by each non-reference base station in the plurality of base stations and the time delay value corresponding to the reference UE reported by each reference base station in the plurality of base stations, and determine a second single-difference time delay value corresponding to each non-reference base station;
perform double-difference processing between the first single-difference time delay value and the second single-difference time delay value, obtain a double-difference value; and
convert the double-difference value into a single-difference value according to the known position coordinates reported by the reference UE and the known position coordinates of the base station.

In some embodiments, the first information further includes at least one of non-line-of-sight NLOS indication information, Tx\Rx beam direction information, or indication information indicating whether the position of the target UE is indoor or outdoor. In this case, the second processing unit 402 is further configured to:
determine the first feature vector according to the first information reported by the at least one base station or according to the first information reported by the target UE and the first information reported by the reference UE, and according to the known position coordinates of the base station, the known position coordinates of the reference UE, and the single-difference value;
match the first feature vector with each second feature vector in the preset positioning database, and determine a second feature vector having the maximum matching degree with the first feature vector; and
determine the position coordinates corresponding to the second feature vector having the maximum matching degree with the first feature vector as the position of the target UE.

In some embodiments, the multipath information includes at least one of the following: a delay of a specific path of a plurality of paths corresponding to a receiving antenna or delay difference among a plurality of paths corresponding to a receiving antenna; a power of a specific path; a phase of a specific path; phase difference among different receiving antennas; time delay difference between different receiving antennas; power difference between different receiving antennas; all or part of data in an array corresponding to a CIR (Channel Impulse Response) of a receiving antenna; all or part of data in an array corresponding to a CFR (Channel Frequency Response) of a receiving antenna; all or part of data in an array corresponding to a PDP (Power Delay Profile) of a receiving antenna; and pseudo-spectrum information of a receiving antenna.

The receiving antenna is a receiving antenna of the base station, a receiving antenna of the target UE or a receiving antenna of the reference UE. The specific path includes at least one of: top N paths with minimum delays, a first path with a minimum delay, or M paths with strongest power, and N and M are both positive integers.

In some embodiments, the time error information includes at least one of following: a clock synchronization error or a clock synchronization error group; a change in a clock synchronization error or a change in a clock synchronization error group; a change rate of a clock synchronization error; a Tx\Rx time error or a Tx\Rx time error group; a change in a Tx\Rx time error or a change in a Tx\Rx time error group; and a change rate of a Tx\Rx time error.

It should be noted that the above-mentioned device provided in the embodiments of the present disclosure can implement all method steps implemented by the foregoing method embodiments, and can achieve the same technical effect, and parts and beneficial effects, same as those of the method embodiments, in this embodiment are not described in detail herein.

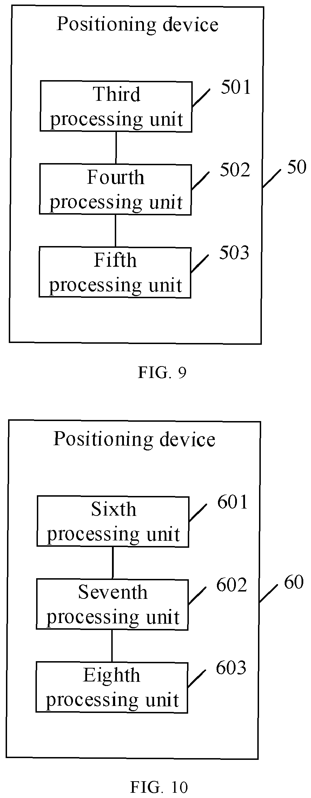

Based on the same inventive concept, some embodiments of the present disclosure further provides a positioning device, which is applied to a target UE or a reference UE. A schematic structural diagram of the device is shown in FIG. 9, and may include a third processing unit 501, a fourth processing unit 502, and a fifth processing unit 503.

The third processing unit 501 is configured to receive a positioning reference signal (PRS) sent by a base station.

The fourth processing unit 502 is configured to determine first information according to a pilot of the PRS, wherein the first information includes at least one of multipath information or time error information.

The fifth processing unit 503 is configured to report the first information to the LMF, wherein the first information is used by the LMF to determine a position of the target UE.

It should be noted that the above-mentioned device provided in the embodiments of the present disclosure can implement all method steps implemented by the foregoing method embodiments, and can achieve the same technical effect, and the parts and beneficial effects, same as those of the method embodiments, in this embodiment are not described in detail herein.

Based on the same inventive concept, some embodiments of the present disclosure further provides a positioning device, which is applied to a base station. A schematic structural diagram of the device is shown in FIG. 10, and may include a sixth processing unit 601, a seventh processing unit 602, and an eighth processing unit 603.

The sixth processing unit 601 is configured to receive a sounding reference signal (SRS) sent by a target UE or a reference UE.

The seventh processing unit 602 is configured to determine first information according to a pilot of the SRS, wherein the first information includes at least one of multipath information or time error information.

The eighth processing unit 603 is configured to report the first information to the LMF, wherein the first information is used by the LMF to determine the position of the target UE.

It should be noted that, the division of the units in this embodiments of the present disclosure is schematic, but is merely a logical functional division, and there may be another division manner in actual implementation. In addition, functional units in the embodiments of the present disclosure may be integrated into one processing unit, or each of the units may exist alone physically, or two or more units may be integrated into one unit. The integrated unit may be implemented in the form of hardware, or may be implemented in the form of a software functional unit.

When the integrated unit is implemented in the form of a software functional unit and sold or used as an independent product, the integrated unit may be stored in a non-transitory computer storage medium. Based on this understanding, an essential part, or a part contributing to the related art, or all or part, of the technical solutions of the present disclosure can be embodied in the form of a software product, and the computer software product is stored in a storage medium, and includes several instructions for enabling a computer device (which may be a personal computer, a server, or a network device, etc.) or a processor to perform all or part of the steps of the method according to various embodiments of the present disclosure. The foregoing storage medium includes various media that can store program codes, such as a USB flash disk, a mobile hard disk, a read-only memory (ROM), a random access memory (RAM), a magnetic disk, or an optical disk.

Based on the same inventive concept, some embodiments of the present disclosure further provide a non-transitory computer storage medium storing a computer program, where the computer program is configured to implement the steps of any one of the positioning methods provided in any one or any one of the embodiments of the present disclosure when executed by the processor.

The non-transitory computer storage medium may be any usable medium or data storage device accessible by a computer, and includes, but is not limited to, a magnetic memory (such as a floppy disk, a hard disk, a magnetic tape, a magneto-optical disk (MO), etc.), an optical memory (such as CD, DVD, BD, HVD, etc.), and a semiconductor memory (for example, a ROM, an EPROM, an EEPROM, a non-volatile memory (NAND Flash), a solid state disk (SSD)), etc.

Those skilled in the art should understand that the embodiments of the present disclosure may be provided as a method, a system, or a computer program product. Therefore, the present disclosure may take the form of an entirely hardware embodiment, an entirely software embodiment, or an embodiment combining software and hardware aspects. Moreover, the present disclosure may take the form of a computer program product implemented on one or more computer-usable storage media (including but not limited to a disk memory and an optical memory, etc.) including computer-usable program codes.

The present disclosure is described with reference to a flowchart and/or a block diagram of a method, a device (system), and a computer program product according to some embodiments of the present disclosure. It should be understood that each flow and/or block in the flowcharts and/or block diagrams, and combinations of flows and/or blocks in the flowcharts and/or block diagrams, can be implemented by computer-executable instructions. These computer-executable instructions may be provided to a processor of a general purpose computer, a special purpose computer, an embedded processor, or other programmable data processing device to generate a machine such that instructions executed by a processor of the computer or other programmable data processing device generate means for implementing functions specified in one or more flows of the flowchart and/or one or more blocks of the block diagram.

These processor-executable instructions may also be stored in a non-transitory computer memory that can direct a computer or other programmable data processing device to operate in a particular manner such that the instructions stored in the non-transitory computer-readable memory produce a product that includes an instruction device that implements the functions specified in one or more flows of the flowchart and/or one or more blocks of the block diagram.

These processor-executable instructions may also be loaded onto a computer or other programmable data processing device such that a series of operational steps are performed on a computer or other programmable device to produce a computer-implemented process, such that the instructions executed on the computer or other programmable device provide steps for implementing the functions specified in one or more flows of the flowchart and/or one or more blocks of the block diagram.

The technical solution provided in the embodiments of the present disclosure has at least the following beneficial effects:
the LMF receives the first information reported by the at least one base station, or the first information reported by the target user equipment (UE) and the first information reported by the reference UE, respectively, and the first information includes at least one of multipath information or time error information, the position of the target UE is determined according to the first information reported by the at least one base station or according to the first information reported by the target UE and the first information reported by the reference UE, and according to a preset positioning database. In this way, in a complex multi-path environment and in a scenario in which a time error has time-variability, a more recognizable channel space feature provided by the multipath information is combined with the time error information capable of reflecting the time feature, so that a matching mechanism with space-time consistency is realized, the influence from time-variability of the time error is eliminated, and the positioning precision of the target UE is improved.

Obviously, a person skilled in the art may make various modifications and variations to the present disclosure without departing from the spirit and scope of the present disclosure. Thus, if these modifications and variations of the present disclosure fall within the scope of the claims of the present disclosure and the equivalent technologies thereof, the present disclosure is also intended to include these modifications and variations.

## Claims

1. A positioning method performed by a location management function (LMF), comprising:
receiving first information reported by at least one base station, or first information reported by target User Equipment (UE) and first information reported by a reference UE, wherein first information comprises at least one of multipath information or time error information;
determining a position of the target UE according to the first information reported by the at least one base station or according to the first information reported by the target UE and the first information reported by the reference UE, and according to a preset positioning database.

2. The method according to claim 1, wherein the first information further comprises at least one of following:
non-line-of-sight (NLOS) indication information, or Transmission\Reception beam direction information, or indication information indicating whether the position of the target UE is indoor or outdoor,
determining the position of the target UE according to the first information reported by the at least one base station or according to the first information reported by the target UE and the first information reported by the reference UE, and according to the preset positioning database comprises:
determining a first feature vector according to the first information reported by the at least one first base station, or according to the first information reported by the target UE and the first information reported by the reference UE, and according to known position coordinates of the at least one base station and known position coordinates of the reference UE;
matching the first feature vector with each second feature vector in the preset positioning database, and determining a second feature vector having a maximum matching degree with the first feature vector;
determining, as the position of the target UE, position coordinates corresponding to the second feature vector having the maximum matching degree with the first feature vector.

3. The method according to claim 1, wherein before determining the position of the target UE, the method further comprises:
receiving time delay values reported by a plurality of base stations, performing single-difference processing between time delay values reported by non-reference base stations in the plurality of base stations and time delay values reported by reference base stations in the plurality of base stations, respectively, and determining single-difference time delay values corresponding to the non-reference base stations; or
receiving a single-difference delay value, reported by the target UE or the reference UE, corresponding to each non-reference base station in the plurality of base stations.

4. The method according to claim 3, wherein the first information further comprises at least one of following:
non-line-of-sight NLOS indication information, or Transmission\Reception beam direction information, or indication information indicating whether the position of the target UE is indoor or outdoor,
determining the position of the target UE according to the first information reported by the at least one base station or according to the first information reported by the target UE and the first information reported by the reference UE, and according to the preset positioning database comprises:
determining a first feature vector according to the first information reported by the at least one base station or according to the first information reported by the target UE and the first information reported by the reference UE, and according to known position coordinates of the plurality of base stations and the single-difference time delay values respectively corresponding to the non-reference base stations;
matching the first feature vector with each second feature vector in the preset positioning database, and determining a second feature vector having a maximum matching degree with the first feature vector; and
determining, as the position of the target UE, position coordinates corresponding to the second feature vector having the maximum matching degree with the first feature vector.

5. The method according to claim 1, wherein before the determining the position of the target UE, the method further comprises:
receiving single-difference time delay values reported by the target UE and single-difference time delay values reported by the reference UE, wherein each of the single-difference time delay values is a single-difference time delay value corresponding to a non-reference base station in the plurality of base stations;
performing double-difference processing between the single-difference time delay values reported by the target UE and the single-difference time delay values reported by the reference UE, to obtain double-difference values; and
converting the double-difference values into single-difference values according to known position coordinates reported by the reference UE and known position coordinates of a base station.

6. The method according to claim 1, wherein before determining the position of the target UE, the method further comprises:
receiving time delay values reported by a plurality of base stations and respectively corresponding to the target UE and a reference UE;
performing single-difference processing between a delay value corresponding to the target UE reported by each non-reference base station in the plurality of base stations and a delay value corresponding to the target UE reported by each reference base station in the plurality of base stations, and determining a first single-difference time delay value corresponding to each non-reference base station;
performing single-difference processing between the time delay value corresponding to the reference UE reported by each non-reference base station in the plurality of base stations and the time delay value corresponding to the reference UE reported by each reference base station in the plurality of base stations, and determining a second single-difference time delay value corresponding to each non-reference base station;
performing double-difference processing between the first single-difference time delay value and the second single-difference time delay value, obtaining a double-difference value; and
converting the double-difference value into a single-difference value according to known position coordinates reported by the reference UE and known position coordinates of a base station.

7. The method according to claim 5 or 6, wherein the first information further comprises at least one of following:
non-line-of-sight NLOS indication information, or Transmission\Reception beam direction information, or indication information indicating whether the position of the target UE is indoor or outdoor,
determining the position of the target UE according to the first information reported by the at least one base station or according to the first information reported by the target UE and the first information reported by the reference UE, and according to the preset positioning database comprises:
determining a first feature vector according to the first information reported by the at least one base station or according to the first information reported by the target UE and the first information reported by the reference UE, and according to known position coordinates of a base station, known position coordinates of the reference UE, and the single-difference value;
matching the first feature vector with each second feature vector in the preset positioning database, and determining a second feature vector having a maximum matching degree with the first feature vector; and
determining, as the position of the target UE, position coordinates corresponding to the second feature vector having the maximum matching degree with the first feature vector.

8. The method according to claim 1, wherein the multipath information comprises at least one of following:
a delay of a specific path of a plurality of paths corresponding to a receiving antenna or delay difference among a plurality of paths corresponding to a receiving antenna; or
a power of a specific path; or
a phase of a specific path; or
phase difference among different receiving antennas; or
time delay difference between different receiving antennas; or
power difference between different receiving antennas; or
all or part of data in an array corresponding to a Channel Impulse Response (CIR) of a receiving antenna; or
all or part of data in an array corresponding to a Channel Frequency Response (CFR) of a receiving antenna; or
all or part of data in an array corresponding to a Power Delay Profile (PDP) of a receiving antenna; or
pseudo-spectrum information of a receiving antenna,
wherein the receiving antenna is a receiving antenna of a base station, a receiving antenna of the target UE or a receiving antenna of the reference UE, the specific path comprises at least one of: top N paths with minimum delays, or a first path with a minimum delay, or M paths with strongest powers, and both N and M are positive integers.

9. The method according to claim 1, wherein the time error information comprises at least one of following:
a clock synchronization error or a clock synchronization error group; or
a change in a clock synchronization error or a change in a clock synchronization error group; or
a change rate of a clock synchronization error; or
a Transmission\Reception time error or a Transmission\Reception time error group; or
a change in a Transmission\Reception time error or a change in a Transmission\Reception time error group; or
a change rate of a Transmission\Reception time error.

10. A positioning method performed by a target User Equipment (UE) or a reference UE, comprising:
receiving a positioning reference signal (PRS) sent by a base station;
determining first information according to a pilot of the PRS, wherein the first information comprises at least one of multipath information or time error information;
reporting the first information to a location management function (LMF), wherein the first information is used by the LMF to determine a position of the target UE.

11. A positioning method performed by a base station, comprising:
receiving a sounding reference signal (SRS) sent by a target User Equipment (UE) or a reference UE;
determining first information according to a pilot of the SRS, wherein the first information comprises at least one of multipath information or time error information; and
reporting the first information to a location management function (LMF), wherein the first information is used by the LMF to determine a position of the target UE.

12. A positioning device applied to a location management function (LMF), comprising:
a memory, a transceiver, and a processor, wherein the memory is configured to store a computer program, the transceiver is configured to transmit and receive data under control of the processor, the processor is configured to read the computer program in the memory and execute following operations:
receiving first information reported by at least one base station, or first information reported by a target User Equipment (UE) and first information reported by a reference UE, wherein first information comprises at least one of multipath information or time error information;
determining a position of the target UE according to the first information reported by the at least one base station or according to the first information reported by the target UE and the first information reported by the reference UE, and according to a preset positioning database.

13. A positioning device applied to a target User Equipment (UE) or a reference UE, comprising:
a memory, a transceiver, and a processor, wherein the memory is configured to store a computer program, the transceiver is configured to transmit and receive data under control of the processor, the processor is configured to read the computer program in the memory and execute following operations:
receiving a positioning reference signal (PRS) sent by a base station;
determining first information according to a pilot of the PRS, wherein the first information comprises at least one of multipath information or time error information;
reporting the first information to a location management function (LMF), wherein the first information is used by the LMF to determine a position of the target UE.

14. A positioning device applied to a base station, comprising:
a memory, a transceiver, and a processor, wherein the memory is configured to store a computer program, the transceiver is configured to transmit and receive data under control of the processor, the processor is configured to read the computer program in the memory and execute following operations:
receiving a sounding reference signal (SRS) sent by a target User Equipment (UE) or a reference UE;
determining first information according to a pilot of the SRS, wherein the first information comprises at least one of multipath information or time error information; and
reporting the first information to a location management function (LMF), wherein the first information is used by the LMF to determine a position of the target UE.

15. A positioning device applied to a location management function (LMF), comprising:
a first processing unit configured to receive first information reported by at least one base station, or first information reported by a target User Equipment (UE) and first information reported by a reference UE, wherein first information comprises at least one of multipath information or time error information;
a second processing unit configured to determine a position of the target UE according to the first information reported by the at least one base station or according to the first information reported by the target UE and the first information reported by the reference UE, and according to a preset positioning database.

16. A positioning device applied to a target User Equipment (UE) or a reference UE, comprising:
a third processing unit configured to receive a positioning reference signal (PRS) sent by a base station;
a fourth processing unit configured to determine first information according to a pilot of the PRS, wherein the first information comprises at least one of multipath information or time error information;
a fifth processing unit configured to report the first information to a location management function (LMF), wherein the first information is used by the LMF to determine a position of the target UE.

17. A positioning device applied to a base station, comprising:
a sixth processing unit configured to receive a sounding reference signal (SRS) sent by a target User Equipment (UE) or a reference UE;
a seventh processing unit configured to determine first information according to a pilot of the SRS, wherein the first information comprises at least one of multipath information or time error information;
an eighth processing unit configured to report the first information to a location management function (LMF), wherein the first information is used by the LMF to determine a position of the target UE.

18. A non-transitory computer-readable storage medium, wherein the non-transitory computer-readable storage medium stores a computer program, and the computer program is configured to cause a computer to execute the method according to any one of claims 1-11.
